# EUROPEAN PATENT SPECIFICATION

(11) **EP 2 846 343 B1**
(45) Date of publication and mention of the grant of the patent: **25.05.2016**
(21) Application number: 13182907.9
(22) Date of filing: 04.09.2013
(51) Int. Cl.: H01H 33/59, H01H 9/04, H01G 2/10, E21B 33/035

(54) **Subsea DC switchgear and associated power converter**
Unterwasser-Gleichstrom-Schaltgerät und zugehöriger Leistungswandler
Appareillage de commutation CC sous-marin et convertisseur de puissance associé

(43) Date of publication of application: 11.03.2015
(73) Proprietor: ABB Technology Ltd, 8050 Zürich (CH)
(72) Inventor: Spindler, Christian, 8707 Uetikon am See (CH); Arnold, Martin, 5400 Baden (CH); Rahimo, Munaf, 5619 Uezwil (CH); Vemulapati, Umamaheswara, 5430 Wettingen (CH)
(74) Representative: Savela, Reino Aleksi

(56) References cited:
- WO-A1-2008/055515
- WO-A1-2011/050832

## Description

### TECHNICAL FIELD

The invention relates to a subsea DC switchgear and associated power converter.

### BACKGROUND

An area of great development at the moment is subsea power electronics. One emerging application is powering electric machinery on the seabed, e.g. used in the oil and gas exploitation industry.

In a subsea environment, hydrostatic pressure increases with a rate of 1 bar each 10 m of water depth. Electrical power equipment needs to be able to withstand the high hydrostatic pressure with target values in the order of 300 bar or even 450 bar. This includes any switchgear provided in such an installation.

WO 2008/082303 presents a vacuum circuit breaker assembly with a housing in which a vacuum circuit breaker is accommodated. The housing is fluid tight and arranged to maintain a pressure inside the housing at a predetermined level which is independent of a pressure outside the housing. The housing further accommodates a drive mechanism for operating the vacuum circuit breaker, and the drive mechanism is arranged to be actuated using non-mechanical connections. The vacuum circuit breaker assembly may be used in a switchgear assembly with an external housing. The switchgear assembly may be used in subsea or deep sea environments. However such housing for enclosing an entire vacuum breaker is cumbersome and requires a lot of space. Increased space requirement implies increased wall thickness in order to withstand the pressure. Hence, large installations are very heavy, expensive, hard to cool and not easy to handle.

WO2001/050832 discloses a DC switchgear comprising power semiconductors controllable to break a circuit and associated capacitors.

WO2008/055515 discloses a subsea device that contains power electronics components where it has been specifically chosen to avoid using capacitors due to their low resistance to high pressure.

### SUMMARY

It is an object to provide a circuit breaker which is space efficient and reliable for installation in a subsea environment.

According to a first aspect, it is presented a subsea DC switchgear comprising: at least one power semiconductor controllable to break a circuit; at least one capacitor respectively associated with each one of the at least one power semiconductor; and a pressure housing arranged to prevent surrounding hydrostatic pressure from pressurising an interior of the pressure housing. The at least one capacitor is provided inside the pressure housing and the at least one power semiconductor is provided external to the pressure housing. With this solution, the capacitors are provided within a low pressure environment, but the semiconductors are provided in a high pressure environment. This implies lower size than in the prior art, which has great impact on thickness and weight of the pressure housing. Moreover, the power semiconductors are more easily cooled outside the pressure housing.

The subsea DC switchgear may be provided with a plurality of power semiconductors and the capacitors for the plurality of power semiconductors may be provided inside a single pressure housing. A single pressure housing is stable and cost efficient solution to providing the pressure housing.

Each one of the capacitors for the plurality of power semiconductors may be provided inside separate pressure housings. This provides additional reliability, since (with sufficient over dimensioning in the number of power semiconductors) if one pressure housing would rupture and cause the enclosed capacitor(s) and/or controller to fail, other power semiconductors could still function and be controlled to block or conduct as desired.

The subsea DC switchgear may further comprise at least one controller respectively associated with each one of the at least one power semiconductor, wherein the at least one controller is provided inside the pressure housing. In this way, the controller does not need to be adapted for a high pressure environment.

The subsea DC switchgear may further comprise a mechanical switch provided in parallel to a serial connection of all of the at least one power semiconductors. The mechanical switch in conducting state can be used during normal operation, whereby losses through the subsea DC switchgear are negligible.

According to a second aspect, it is provided a subsea power converter comprising the subsea DC switchgear according to the first aspect.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

The invention is now described, by way of example, with reference to the accompanying drawings, in which:
Fig 1 is a schematic diagram of a subsea DC (Direct Current) switchgear according to one embodiment;
Fig 2 is a schematic diagram illustrating an embodiment of a solid state breaker of the subsea DC switchgear of Fig 1 where capacitors are provided inside a single pressure housing;
Fig 3 is a schematic diagram illustrating an embodiment of a solid state breaker of the subsea DC switchgear of Fig 1 where the sets of capacitors are provided inside separate pressure housings;
Fig 4 is a schematic diagram illustrating an embodiment of a solid state breaker of the subsea DC switchgear of Fig 1 where the capacitors are not provided inside a pressure housing;
Fig 5 is a schematic diagram illustrating an embodiment of a solid state breaker of the subsea DC switchgear of Fig 1 where both capacitors and power semiconductors are provided inside a pressure housing;
Fig 6 is a schematic diagram illustrating an embodiment of a solid state breaker of the subsea DC switchgear of Fig 1 where both capacitors and power semiconductors are provided inside a pressure housing of an annular shape; and
Fig 7 is a schematic diagram illustrating a subsea power converter comprising a subsea power converter comprising the subsea DC switchgear of Fig 1.

### DETAILED DESCRIPTION

The invention will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout the description.

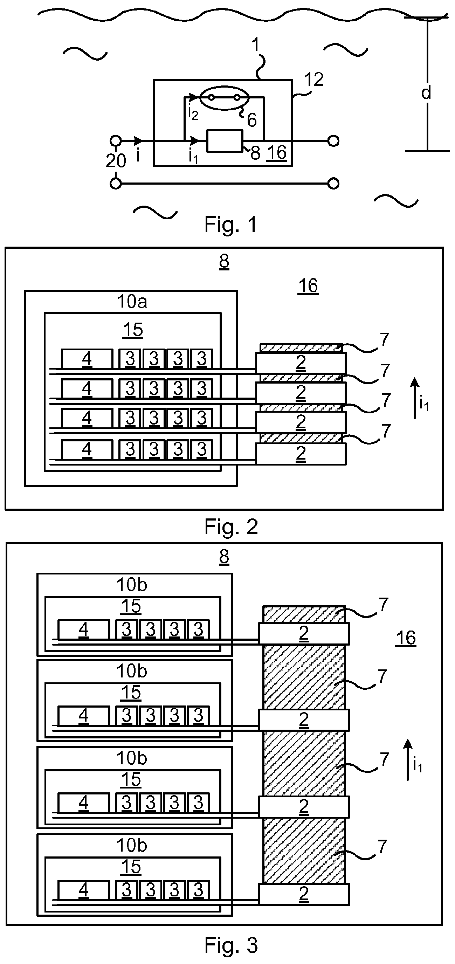

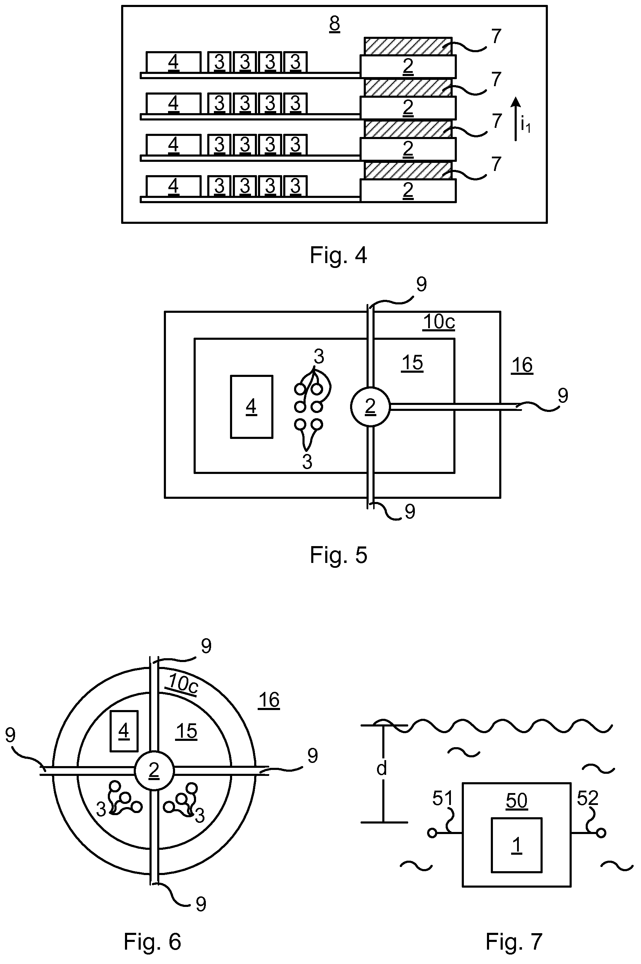

Fig 1 is a schematic diagram of a subsea DC switchgear 1 according to one embodiment. A DC source 20 provides a current i. The subsea DC switchgear 1 is provided at a depth d from sea level. The depth d can be significant, and can result in hydrostatic pressures of up to 300 bar (roughly corresponding to 3,000 metres) or even more. The subsea DC switchgear 1 can be provided as part of a subsea DC distribution network or as part of a power converter as shown in Fig 7 and explained in more detail below.

The subsea DC switchgear 1 comprises a solid state breaker 8 which uses one or more semiconductors to break the current i.

In one embodiment, the subsea DC switchgear 1 is provided as a hybrid breaker, where a mechanical switch 6 is provided in parallel to the solid state breaker 8. When the subsea DC switchgear 1 is in a conducting state, the mechanical switch 6 conducts, and the solid state breaker 8 can be in a blocking state, whereby a current i₁ through the solid state breaker 8 is zero and a current i₂ through the mechanical switch 6 is equal to the current i through the subsea DC switchgear. By routing all current through the mechanical switch 6, this leads to negligible losses when the subsea DC switchgear 1 is in a conducting state.

When the subsea DC switchgear 1 should start to block, the solid state breaker 8 is set in a conducting state and the mechanical switch 6 opens, whereby the current is commutated to the solid state breaker 8. This reduces or even eliminates arcing when the mechanical switch 6 opens.

Optionally, a snubber and/or surge arrester (not shown) can be provided as a third path in parallel to the mechanical switch 6 and the solid state breaker 8. The subsea DC switchgear 1 can be protected against the sea water by a thin container 12 encompassing an interior liquid 16 which is hardly compressible. While this subjects the interior of the subsea DC switchgear 1 to hydrostatic pressure, the corrosiveness of sea water is avoided. The interior liquid can be any suitable dielectric liquid, e.g. an oil. The thin container 12 can be thermally conductive such that the interior liquid 16 is in thermal contact with the surrounding sea water. In this way, any heat generated by components of the DC switchgear is cooled by the interior liquid which in turn is cooled by the surrounding sea water.

In one embodiment, the thin container 12 is omitted and sea water is provided around the components of the subsea DC switchgear.

Fig 2 is a schematic diagram illustrating an embodiment of a solid state breaker 8 of the subsea DC switchgear 1 of Fig 1 where capacitors 3 are provided inside a single pressure housing 10a.

The solid state breaker 8 comprises at least one power semiconductor 2 controllable to break a circuit as explained above. In the embodiment of Fig 2, there area four power semiconductors 2 connected serially along the direction of the current i₁. The power semiconductors 2 can e.g. be IGCTs (Integrated Gate-Commutated Thyristors) or IGBTs (insulated Gate Bipolar Transistor) or any other type of controllable power semiconductor. By providing the power semiconductors serially, great reliability is achieved, since, (with sufficient over dimensioning in the number of power semiconductors 2) if one power semiconductor fails, it is most commonly set in a short circuit failure mode. This allows the remaining functioning power semiconductors to control the current through the solid state breaker 8 to flow or to be blocked. The number of semiconductors 2 can be selected in accordance with other requirements (such as voltage rating) and can be one, two, three, four or any other number of power semiconductors.

The power semiconductors 2 are connected to each other and other components in the path of the current i₁ using distance holders 7 which are electrically conductive and can also be thermally conductive to cool the power semiconductors 2.

A set of capacitors 3 are provided to assist to provide sufficient charge to the gate when the power semiconductors are controlled to turn-on or turn-off or. A very short distance between capacitors and gate electrode of the power semiconductors effectively lowers the gate (stray) inductance.

There is a set of one or more capacitors 3 associated with each power semiconductor 2. In this embodiment, there are four capacitors 3 associated with each power semiconductor 2 but this number can be any suitable number to achieve the desired characteristics, also depending on the capacitance of each capacitor 3.

In this embodiment, there is also a controller 4 associated with each power semiconductor. The controller 4 comprises suitable circuitry for controlling the gate of the power semiconductor 2 as controlled by a central controller (not shown) for controlling the state of the solid state breaker 8. The capacitors 3 and the controller 4 can be provided on a common printed circuit board (PCB) which is connected to the respective power semiconductor 2.

A pressure housing 10a is arranged to prevent surrounding hydrostatic pressure from pressurising an interior 15 of the pressure housing 10a. In this embodiment, all of the capacitors 3 of the solid state breaker 8 are provided inside the pressure housing 10a. In this way, the capacitors 3 do not need to be pressure tolerant. The pressure housing 10a can e.g. be made of a strong metal such as steel of sufficient thickness to withstand surrounding hydrostatic pressure. The interior of the pressure housing 10a can e.g. be filled with a gas, such as air, or a liquid, such as an oil.

The power semiconductors 2 are provided external to the pressure housing 10a. In this way, the power semiconductors are subjected to the interior liquid 16, which is thermally connected to surrounding sea water, e.g. via the surrounding container or via one or more heat exchangers. This provides an efficient cooling of the power semiconductors 2.

Fig 3 is a schematic diagram illustrating an embodiment of a solid state breaker 8 of the subsea DC switchgear 1 of Fig 1 where the sets of capacitors 3 are provided inside separate pressure housings 10b. The general operation of the solid state breaker 8 of Fig 3 is similar to the solid state breaker of Fig 2 and only differences will be described here.

In this embodiment, the capacitor(s) 3 and optionally controller 4 associated with each power semiconductor 2 is provided in a separate pressure housing 10b. When adjacent separate housings 10b are in contact, the facing housing walls could optionally be provided with half the thickness of other walls of the housing 10b. This provides additional reliability, since (with sufficient over dimensioning in the number of power semiconductors 2) if one pressure housing 10b would rupture and cause the enclosed capacitor(s) 3 and/or controller 4 to fail, other power semiconductors 2 could still function and be controlled to block or conduct as desired.

Fig 4 is a schematic diagram illustrating an embodiment of a solid state breaker 8 of the subsea DC switchgear 1 of Fig 1 where the capacitors 3 are not provided inside a pressure housing. The capacitors 3 then need to be pressure tolerant and can e.g. be ceramic, film, solid tantalum type capacitors.

Fig 5 is a schematic diagram illustrating an embodiment of a solid state breaker 8 of the subsea DC switchgear 1 of Fig 1 where both capacitors 3 and power semiconductors 2 are provided inside a pressure housing 10c. Since the power semiconductors 2 are also provided inside the pressure housing 10c, thermal conductors 9 are provided to thermally connect the power semiconductors to the surrounding sea water via the internal liquid 16.

Fig 6 is a schematic diagram illustrating an embodiment of a solid state breaker 8 of the subsea DC switchgear 1 of Fig 1 where both capacitors 3 and power semiconductors 2 are provided inside a pressure housing 10c of an annular shape. The PCB on which the capacitors 3 and the controller are mounted can also be annular. The annular shape of the pressure housing 10c improves its ability to withstand external hydrostatic pressure.

Fig 7 is a schematic diagram illustrating a subsea power converter comprising a subsea power converter 50 comprising the subsea DC switchgear 1 of Fig 1. The power converter 50 is installed subsea at a depth d below sea level. The power converter 50 converts power, e.g. DC to AC, AC to DC, DC to DC or AC to AC and has an input 51 and an output 52, each provided with a suitable number of terminals. The subsea DC switchgear 1 is comprised in the power converter 50 to be able to break a DC current within the power converter 50.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. A subsea DC switchgear (1) comprising:
at least one power semiconductor (2) controllable to break a circuit;
at least one capacitor (3) respectively associated with each one of the at least one power semiconductor (2); and
a pressure housing (10a-b) arranged to prevent surrounding hydrostatic pressure from pressurising an interior (15) of the pressure housing;
wherein the at least one capacitor (3) is provided inside the pressure housing (10a-b) and the at least one power semiconductor (2) is provided external to the pressure housing (10a-b).

2. The subsea DC switchgear (1) according to claim 1 provided with a plurality of power semiconductors (2) and wherein the capacitors (3) for the plurality of power semiconductors (2) are provided inside (15) a single pressure housing (10a).

3. The subsea DC switchgear (1) according to claim 1 provided with a plurality of power semiconductors (2) and wherein each one of the capacitors (3) for the plurality of power semiconductors are provided inside (15) separate pressure housings (10b).

4. The subsea DC switchgear (1) according to any one of the preceding claims, further comprising at least one controller (4) respectively associated with each one of the at least one power semiconductor (2), wherein the at least one controller (4) is provided inside (15) the pressure housing (10a-b).

5. The subsea DC switchgear (1) according to any one of the preceding claims, further comprising a mechanical switch (6) provided in parallel to a serial connection of all of the at least one power semiconductors (2).

6. A subsea power converter (50) comprising the subsea DC switchgear (1) according to any one of the preceding claims.

## Patentansprüche

1. Unterwasser-Gleichstrom-Schaltanlage (1), die Folgendes umfasst:
mindestens einen Leistungshalbleiter (2), der gesteuert werden kann, eine Schaltung aufzutrennen;
mindestens einen Kondensator (3), der jeweils mit jedem des mindestens einen Leistungshalbleiters (2) assoziiert ist; und
ein Druckgehäuse (10a-b), das dafür ausgelegt ist, umgebenden hydrostatischen Druck daran zu hindern, ein Inneres (15) des Druckgehäuses mit Druck zu beaufschlagen;
wobei der mindestens eine Kondensator (3) innerhalb des Druckgehäuses (10a-b) vorgesehen ist und der mindestens eine Leistungshalbleiter (2) außerhalb des Druckgehäuses (10a-b) vorgesehen ist.

2. Unterwasser-Gleichstrom-Schaltanlage (1) nach Anspruch 1, die mit mehreren Leistungshalbleitern (2) versehen ist, und wobei die Kondensatoren (3) für die mehreren Leistungshalbleiter (2) innerhalb (15) eines einzelnen Druckgehäuses (10a) vorgesehen sind.

3. Unterwasser-Gleichstrom-Schaltanlage (1) nach Anspruch 1, die mit mehreren Leistungshalbleitern (2) versehen ist, und wobei jeder der Kondensatoren (3) für die mehreren Leistungshalbleiter (2) innerhalb (15) getrennter Druckgehäuse (10b) vorgesehen ist.

4. Unterwasser-Gleichstrom-Schaltanlage (1) nach einem der vorhergehenden Ansprüche, die ferner mindestens eine Steuerung (4) umfasst, die jeweils mit jedem des mindestens einen Leistungshalbleiters (2) assoziiert ist, wobei die mindestens eine Steuerung (4) innerhalb (15) des Druckgehäuses (10a-b) vorgesehen ist.

5. Unterwasser-Gleichstrom-Schaltanlage (1) nach einem der vorhergehenden Ansprüche, die ferner einen mechanischen Schalter (6) umfasst, der in einer Parallelschaltung zu einer Reihenschaltung aller des mindestens einen Leistungshalbleiters (2) vorgesehen ist.

6. Unterwasser-Leistungswandler (50), der die Unterwasser-Gleichstrom-Schaltanlage (1) nach einem der vorhergehenden Ansprüche umfasst.

## Revendications

1. Appareillage de commutation CC sous-marin (1) comprenant :
au moins un semi-conducteur de puissance (2) pouvant être commandé afin de couper un circuit ;
au moins un condensateur (3) associé au semi-conducteur de puissance (2) ou respectivement à chacun des semi-conducteurs de puissance (2) ; et
un carter résistant à la pression (10a-b) conçu pour empêcher la pression hydrostatique environnante d'agir sur une partie intérieure (15) du carter résistant à la pression ;
dans lequel le ou les condensateurs (3) sont disposés à l'intérieur du carter résistant à la pression (10a-b) et le ou les semi-conducteurs de puissance (2) sont disposés à l'extérieur du carter résistant à la pression (10a-b).

2. Appareillage de commutation CC sous-marin (1) selon la revendication 1, comprenant une pluralité de semi-conducteurs de puissance (2) et dans lequel les condensateurs (3) pour la pluralité de semi-conducteurs de puissance (2) sont disposés à l'intérieur (15) d'un carter résistant à la pression (10a) unique.

3. Appareillage de commutation CC sous-marin (1) selon la revendication 1, comprenant une pluralité de semi-conducteurs de puissance (2) et dans lequel chacun des condensateurs (3) pour la pluralité de semi-conducteurs de puissance est disposé à l'intérieur (15) d'un carter résistant à la pression (10b) distinct.

4. Appareillage de commutation CC sous-marin (1) selon l'une quelconque des revendications précédentes, comprenant en outre au moins un dispositif de commande (4) associé au semi-conducteur de puissance (2) ou respectivement à chacun des semi-conducteurs de puissance (2), dans lequel le ou les dispositifs de commande (4) sont disposés à l'intérieur (15) du carter résistant à la pression (10a-b).

5. Appareillage de commutation CC sous-marin (1) selon l'une quelconque des revendications précédentes, comprenant en outre un interrupteur mécanique (6) disposé en parallèle à un montage en série de l'ensemble des semi-conducteurs de puissance (2).

6. Convertisseur de puissance sous-marin (50) comprenant l'appareillage de commutation CC sous-marin (1) selon l'une quelconque des revendications précédentes.
